(19) Europäisches Patentamt / European Patent Office / Office européen des brevets

(11) **EP 4 213 246 B1**

(12) **EUROPEAN PATENT SPECIFICATION**

(45) Date of publication and mention of the grant of the patent:
**06.11.2024 Bulletin 2024/45**

(21) Application number: **21945360.2**

(22) Date of filing: **30.11.2021**

(51) International Patent Classification (IPC):
**H01M 4/525** (2010.01)

(52) Cooperative Patent Classification (CPC):
**H01M 4/587; H01M 4/0404; H01M 4/13; H01M 4/131; H01M 4/136; H01M 4/1391; H01M 4/1397; H01M 4/36; H01M 4/364; H01M 4/366; H01M 4/485; H01M 4/505; H01M 4/525; H01M 4/58; H01M 4/5825;** (Cont.)

(86) International application number:
**PCT/CN2021/134449**

(87) International publication number:
**WO 2023/097454 (08.06.2023 Gazette 2023/23)**

(54) **POSITIVE ELECTRODE PLATE, SECONDARY BATTERY, BATTERY MODULE, BATTERY PACK AND POWER CONSUMING DEVICE**

POSITIVE EKTRODENPLATTE, SEKUNDÄRBATTERIE, BATTERIEMODUL, BATTERIEPACK UND STROMVERBRAUCHENDE VORRICHTUNG

PLAQUE D'ÉLECTRODE POSITIVE, BATTERIE SECONDAIRE, MODULE DE BATTERIE, ENSEMBLE DE BATTERIES ET DISPOSITIF DE CONSOMMATION D'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.07.2023 Bulletin 2023/29**

(73) Proprietor: **Contemporary Amperex Technology (Hong Kong) Limited
Central, Central And Western District (HK)**

(72) Inventors:
• **BIE, Changfeng**
  **Ningde City, Fujian 352100 (CN)**
• **NI, Huan**
  **Ningde City, Fujian 352100 (CN)**
• **LENG, Xue**
  **Ningde City, Fujian 352100 (CN)**
• **DONG, Miaomiao**
  **Ningde City, Fujian 352100 (CN)**
• **OUYANG, Shaocong**
  **Ningde City, Fujian 352100 (CN)**
• **LIU, Na**
  **Ningde City, Fujian 352100 (CN)**

(74) Representative: **Kraus & Lederer PartGmbB
Thomas-Wimmer-Ring 15
80539 München (DE)**

(56) References cited:
CN-A- 104 779 395    CN-A- 104 900 874
CN-A- 111 200 103    CN-A- 111 200 104
CN-A- 111 900 342    CN-A- 112 510 168
CN-A- 113 594 412    US-A1- 2015 194 664
US-B2- 11 050 053

• ABBIREDD ET AL: "A review of modern particle sizing methods", PROCEEDINGS OF THE INSTITUTION OF CIVIL ENGINEERS. GEOTECHNICALENGINEERING, LONDON, GB, vol. 162, no. 4, 1 January 2009 (2009-01-01), pages 193 - 201, XP009150583, ISSN: 1353-2618
• N.N.: "A basic guide to particle characterization", 1 January 2015 (2015-01-01), XP093118075, Retrieved from the Internet <URL:https://www.cif.iastate.edu/sites/default/files/uploads/Other_Inst/Particle%20Size/Particle%20Characterization%20Guide.pdf> [retrieved on 20240111]

(52) Cooperative Patent Classification (CPC): (Cont.)
**H01M 4/62; H01M 4/622; H01M 4/623;**
**H01M 4/625; H01M 10/052; H01M 10/0525;**
H01M 2004/021; H01M 2004/028; Y02E 60/10

**Description**

**Technical Field**

The present application relates to the technical field of lithium batteries, and in particular to a positive electrode plate, a secondary battery, a battery module, a battery pack and a power consuming device.

**Background Art**

Lithium-ion batteries are widely used in electric vehicles and consumer electronics because of their advantages such as a high energy density, high output power, long cycle life and low environmental pollution. Among them, the application of lithium iron phosphate batteries is expanding, and its market share is increasing year by year.

However, the conductivity of a lithium iron phosphate material is relatively weak, and this characteristic becomes more prominent at a low temperature, which is caused by inherent defects in the olivine crystal structure of the lithium iron phosphate material. Due to the performance weakness of a lithium iron phosphate material, the capacity and working voltage performance of a lithium iron phosphate battery become worse at a low temperature, and the discharge power is limited and reduced. It can be seen that the energy density of a lithium ion battery is significantly affected by a temperature.

US 11 050 053 B2 relates to a battery, comprising a positive electrode plate, a separator and a negative electrode plate, wherein the positive electrode plate comprises a positive electrode current collector and at least two layers of positive active materials on at least one surface of the positive electrode current collector in which the underlying positive active material layer in contact with the positive electrode current collector comprises a first positive active material, a first polymer material, and a first conductive material and in which the upper positive active material layer comprises a second positive active material, a second polymer material, and a second conductive material and the first polymer material comprises an oil-dispersible polymer material having a solubility in NMP at 130° C. for 5 minutes, which is 30% or less of the solubility of PVDF under the same conditions.

CN 113 594 412 A discloses a lithium battery positive plate with a sandwich structure, which comprises a positive current collector and a positive active layer, the positive active layer comprises a conductive layer, a first active layer and a second active layer which are sequentially coated on the positive current collector, the first active layer is a lithium manganate coating or a ternary material coating, and the second active layer is a lithium iron manganese phosphate coating.

**Summary of the Invention**

The present application has been made in view of the above problems, and an objective thereof is to improve the performance of secondary batteries at a low temperature.

In order to achieve the above objective, the present application provides a positive electrode plate, a secondary battery, a battery module, a battery pack and a power consuming device.

A first aspect of the present application provides a positive electrode plate, including a current collector, a first positive electrode active material layer and a second positive electrode active material layer, wherein the second positive electrode active material layer is arranged between the current collector and the first positive electrode active material layer, or the first positive electrode active material layer is arranged between the current collector and the second positive electrode active material layer; the first positive electrode active material layer comprises a first positive electrode active material, a first binder and a first conductive agent, wherein the first positive electrode active material is selected from at least one of $Li_qCoO_2$, $Li_{1+x}Co_{1-y-z}Ni_yMn_zO_2$ or carbon-coated $Li_\beta Fe_\alpha M_{(1-\alpha)}PO_4$, wherein $0 \leq q \leq 1$, $0 \leq x \leq 0.1$, $0 \leq y \leq 0.95$, $0 \leq z \leq 0.95$, $0.2 \leq \alpha \leq 1$, $1 \leq \beta \leq 1.1$, and M is selected from at least one of Cu, Mn, Cr, Zn, Pb, Ca, Co, Ni and Sr; and the second positive electrode active material layer comprises a second positive electrode active material, a second binder and a second conductive agent, wherein the second positive electrode active material is selected from carbon-coated $Li_\beta Fe_\alpha M_{(1-\alpha)}PO_4$, where $0.2 \leq \alpha \leq 1$, $1 \leq \beta \leq 1.1$, M is selected from at least one of Cu, Mn, Cr, Zn, Pb, Ca, Co, Ni, and Sr, and the second positive electrode active material has a diffraction peak A between 29° and 30° in the X-ray diffraction pattern, and a diffraction peak B between 25° and 26°, and the intensity ratio $I_A/I_B$ of the diffraction peaks satisfies: $0.98 \leq I_A/I_B \leq 1.1$, optionally $1.05 \leq I_A/I_B \leq 1.1$, wherein the peak intensity ratio is determined using a copper target X-ray diffractometer.

Thus, in the present application, the low temperature performance of a secondary battery is improved by means of the synergistic effect between the first positive electrode active material layer and the second active material layer in the positive electrode plate.

In any embodiment, the thickness D2 of the second positive electrode active material layer is 2 $\mu$m to 40 $\mu$m, optionally 10 $\mu$m to 30 $\mu$m, and further optionally 15 $\mu$m to 25 $\mu$m. By controlling the thickness of the second positive electrode active material layer, it is beneficial to the improvement of the capacity retention rate and power performance of a secondary battery under low temperature conditions.

In any embodiment, the average particle size of the primary particles of the second positive electrode active material is 20 nm to 240 nm, optionally 20 nm to 160 nm, further optionally 20 nm to 80 nm. By controlling the average particle size of the primary particles of the second positive electrode active material, the migration rate of lithium ions in the positive electrode active material can be improved, which is beneficial to the improvement of the capacity retention rate and power performance of the secondary battery under low temperature conditions.

In any embodiment, based on the total mass of the second positive electrode active material layer, the contents of the second positive electrode active material, the second binder and the second conductive agent are 80% to 98%, 1% to 10% and 1% to 10%, respectively. By controlling the contents of the second positive electrode active material, the second binder and the second conductive agent in the second positive electrode active material layer, it is beneficial to the improvement of the capacity retention rate and power performance of the secondary battery under low temperature conditions.

In any embodiment, the thickness D1 of the first positive electrode active material layer is 100 $\mu$m to 140 $\mu$m, optionally 110 $\mu$m to 130 $\mu$m, and further optionally 115 $\mu$m to 125 $\mu$m. By controlling the thickness of the first positive electrode active material layer, it is beneficial to the improvement of the volume energy density of the secondary battery.

In any embodiment, based on the total mass of the first positive electrode active material layer, the contents of the first positive electrode active material, the first binder and the first conductive agent are 90% to 95%, 2% to 8% and 2% to 8%, respectively. By controlling the contents of the first positive electrode active material, the first binder and the first conductive agent in the first positive electrode active material layer, it is beneficial to the improvement of the volume energy density of the secondary battery.

In any embodiment, the first conductive agent and the second conductive agent are each independently selected from at least one of carbon nanotubes, conductive carbon, gas-phase carbon nanofibers, graphite, acetylene black, metal fibers, organic conductive polymers, and graphene. The first binder and the second binder are each independently selected from at least one of polyvinylidene fluoride, polyvinyl alcohol, polytetrafluoroethylene, sodium carboxymethyl cellulose and polyurethane.

A second aspect of the present application provides a secondary battery, comprising the positive electrode plate of the first aspect of the present application.

A third aspect of the present application provides a battery module, comprising the secondary battery of the second aspect of the present application.

A fourth aspect of the present application provides a battery pack, comprising the battery module of the third aspect of the present application.

A fifth aspect of the present application provides a power consuming device, comprising at least one selected from the secondary battery of the second aspect of the present application, the battery module of the third aspect of the present application or the battery pack of the fourth aspect of the present application.

Beneficial effects of the present application:
The present application provides a positive electrode plate, a secondary battery, a battery module, a battery pack and a power consuming device, wherein the positive electrode plate comprises a first positive electrode active material layer and a second positive electrode active material layer, a second positive electrode active material in the second positive electrode active material layer is selected from carbon-coated $Li_\beta Fe_\alpha M_{(1-\alpha)}PO_4$, an intensity ratio $I_A/I_B$ of the diffraction peak A and diffraction peak B satisfies: $0.98 \leq I_A/I_B \leq 1.1$, the proportion of crystal plane (010) of a carbon-coated lithium iron phosphate material exposed is increased, such that the active material in the second positive electrode active material layer first undergoes an electrochemical reaction and generates heat, which further promotes the active material in the first positive electrode active material layer in the secondary battery to undergo an electrochemical reaction. On this basis, in the present application, the secondary battery of the present application has a good low temperature performance by means of the synergistic effect between the first positive electrode active material layer and the second positive electrode active material layer in the positive electrode plate.

**Brief Description of the Drawings**

Fig. 1 is a schematic diagram of a positive electrode plate according to one embodiment of the present application.
Fig. 2 is a schematic diagram of a positive electrode plate according to another embodiment of the present application.
Fig. 3 is a scanning electron microscope image of carbon-coated lithium iron phosphate particles in the first positive electrode active material layer.
Fig. 4 is a scanning electron microscope image of carbon-coated lithium iron phosphate particles in the second positive electrode active material layer.

Fig. 5 is a schematic diagram of a secondary battery according to an embodiment of the present application.

Fig. 6 is an exploded view of the secondary battery according to the embodiment of the present application as shown in Fig. 5.

Fig. 7 is a schematic diagram of a battery module according to an embodiment of the present application.

Fig. 8 is a schematic diagram of a battery pack according to an embodiment of the present application.

Fig. 9 is an exploded view of a battery pack according to an embodiment of the present application as shown in Fig. 7.

Fig. 10 is a schematic diagram of a power consuming device according to an embodiment of the present application in which a secondary battery is used as a power source.

List of reference numerals:

1 battery pack; 2 upper box body; 3 lower box body; 4 battery module; 5 secondary battery; 51 housing; 52 electrode assembly; 53 cover plate; 11 first positive electrode active material layer; 12 second positive electrode active material layer; 13 current collector.

## Detailed Description of Embodiments

Hereinafter, the embodiments of the positive electrode plate, secondary battery, battery module, battery pack and power consuming device of the present application are specifically disclosed in the detailed description with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed herein are defined in the form of lower and upper limits, where a given range is defined by the selection of a lower limit and an upper limit, and the selected lower and upper limits define the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed, and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of $\geq 2$, it is equivalent to disclosing that the parameter is, for example, an integer of 2, 3, 4, 5, 6, 7, 8, 9, 10, 11, 12, and the like.

All the implementations and optional implementations of the present application can be combined with one another to form new technical solutions, unless otherwise stated.

All technical features and optional technical features of the present application can be combined with one another to form a new technical solution, unless otherwise stated.

Unless otherwise stated, all the steps of the present application can be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), steps (a), (c) and (b), and also steps (c), (a) and (b), etc.

The terms "comprise" and "include" mentioned in the present application are openended or closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, a condition "A or B" is satisfied by any one of the following: A is true (or present) and B is false (or not present); A is false (or not present) and B is true (or present); or both A and B are true (or present).

In the specific embodiments of the present application, the present application is explained by means of using a lithium-ion battery as an example of secondary batteries, but the secondary batteries in the present application are not limited to lithium-ion batteries.

During the research of lithium iron phosphate material batteries, the inventors of the present application found that lithium iron phosphate materials have the problem of poor low-temperature conductivity, which makes it difficult for the capacity and working voltage of lithium iron phosphate batteries to meet application requirements at low temperatures, thus affecting the low temperature performance of lithium iron phosphate material batteries. In order to improve the low temperature performance of lithium iron phosphate material batteries such that the lithium iron phosphate material batteries have better performance such as a longer range and a longer life at a low temperature when used in a power consuming device, in view of this, the present application provides a positive electrode plate, a secondary battery, a battery module, a battery pack and a power consuming device.

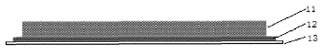

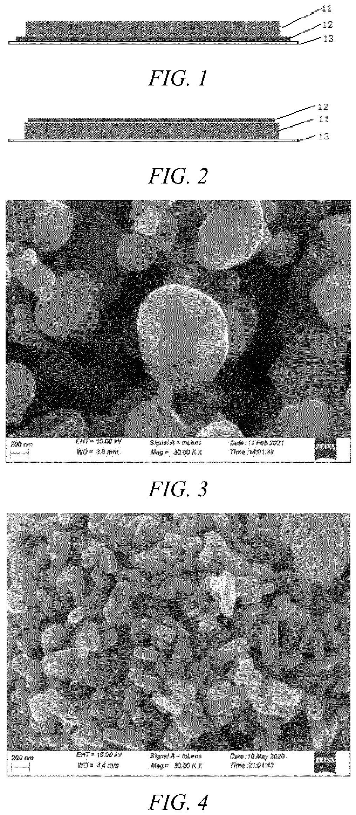

In one embodiment of the present application, the present application proposes a positive electrode plate, as an example, as shown in FIG. 1, comprising a current collector 13, a first positive electrode active material layer 11 and a second positive electrode active material layer 12 arranged between the current collector 13 and the first positive electrode active material layer 11; and in another embodiment, as shown in FIG. 2, comprising a current collector 13, a second positive electrode active material layer 12 and a first positive electrode active material layer 11 arranged between the current collector 13 and the second positive electrode active material layer 12.

The first positive electrode active material layer comprises a first positive electrode active material, a first binder and a first conductive agent, wherein the first positive electrode active material is selected from at least one of $Li_qCoO_2$, $Li_{1+x}Co_{1-y-z}Ni_yMn_zO_2$ or carbon-coated $Li_\beta Fe_\alpha M_{(1-\alpha)}PO_4$, wherein $0 \leq q \leq 1$, $0 \leq x \leq 0.1$, $0 \leq y \leq 0.95$, $0 \leq z \leq 0.95$, $0.2 \leq \alpha \leq 1$, $1 \leq \beta \leq 1.1$, and M is selected from at least one of Cu, Mn, Cr, Zn, Pb, Ca, Co, Ni and Sr; and the second positive electrode active material layer comprises a second positive electrode active material, a second binder and a second conductive agent, wherein the second positive electrode active material is selected from carbon-coated $Li_\beta Fe_\alpha M_{(1-\alpha)}PO_4$, where $0.2 \leq \alpha \leq 1$, $1 \leq \beta \leq 1.1$, M is selected from at least one of Cu, Mn, Cr, Zn, Pb, Ca, Co, Ni, and Sr, and the second positive electrode active material has a diffraction peak A between 29° and 30° in the X-ray diffraction pattern, and a diffraction peak B between 25° and 26°, and the intensity ratio $I_A/I_B$ of the diffraction peaks satisfies: $0.98 \leq I_A/I_B \leq 1.1$, optionally $1.05 \leq I_A/I_B \leq 1.1$, wherein the peak intensity ratio is determined using a copper target X-ray diffractometer.

Although the mechanism is not yet clear, the inventor of the present application has unexpectedly discovered: a second positive electrode active material in the second positive electrode active material layer is selected from carbon-coated $Li_\beta Fe_\alpha M_{(1-\alpha)}PO_4$; by controlling an intensity ratio of the diffraction peaks in the X-ray diffraction pattern of the second positive electrode active material, the proportion of crystal plane (010) of the carbon-coated lithium iron phosphate material (such as carbon-coated $Li_\beta Fe_\alpha M_{(1-\alpha)}PO_4$) exposed is increased, such that the active material in the second positive electrode active material layer first undergoes an electrochemical reaction and generates heat, which further promotes the active material in the first positive electrode active material layer in the lithium ion battery to further undergo an electrochemical reaction, and by means of the synergistic effect between the first positive electrode active material layer and the second positive electrode active material layer in the positive electrode plate, the capacity retention rate and power performance of the lithium ion battery under low temperature conditions can be effectively improved, thus the overall low temperature performance of the secondary battery can be improved.

The inventor of the present application has found that the second positive electrode active material has a diffraction peak A between 29° and 30° in the X-ray diffraction pattern, and a diffraction peak B between 25° and 26°, wherein the higher intensity ratio of diffraction peaks $I_A/I_B$ results in a higher proportion of crystal plane (010) of the carbon-coated lithium iron phosphate material (such as carbon-coated $Li_\beta Fe_\alpha M_{(1-\alpha)}PO_4$) exposed. It is speculated that this may be due to the intercalation and deintercalation of lithium ions in the carbon-coated lithium iron phosphate material along the b-axis during the electrochemical reaction. Therefore, the higher the exposure ratio of (010) crystal plane, the better the electrochemical reaction kinetics. Therefore, the second positive electrode active material having the diffraction peak intensity ratio of the present application exhibits excellent low temperature performance when applied to a lithium ion battery. The inventor of the present application also found that when the intensity ratio $I_A/I_B$ of the diffraction peaks satisfies: $1.05 \leq I_A/I_B \leq 1.1$, the low temperature performance of a secondary battery prepared by the above materials is further improved.

On this basis, when the lithium ion battery prepared by the above positive electrode plate is charged and discharged at a low temperature, the active material in the second positive electrode active material layer of the positive electrode plate first undergoes an electrochemical reaction and generates heat, which further promotes the active material in the first positive electrode active material layer in the lithium ion battery to further undergo an electrochemical reaction, and by means of the synergistic effect between the first positive electrode active material layer and the second positive electrode active material layer, the overall low temperature performance of the secondary battery is improved.

In some embodiments, the thickness D2 of the second positive electrode active material layer in the positive electrode plate of the present application is 2 µm to 40 µm, optionally 10 µm to 30 µm, and further optionally 15 µm to 25 µm. By making the thickness of the second positive electrode active material layer within the above range, the following situations can be avoided: the thickness of the second positive electrode active material layer is too large, which may affect the volume energy density of the lithium ion battery, and the thickness of the second positive electrode active material layer is too small, which may affect the low temperature performance of the lithium ion battery. Therefore, in the present application, by controlling the thickness of the second positive electrode active material layer within the above range, it is beneficial to balance the low temperature performance and volume energy density of the lithium ion battery.

In some embodiments, the average particle size of the primary particles of the second active material of the present application is 20 nm to 240 nm, optionally 20 nm to 160 nm, and further optionally 20 nm to 80 nm. The inventor of the present application found that when the particle size of the primary particles of the second active material is within the above range, the diffusion path of lithium ions during the electrochemical reaction can be shortened, and a shorter transmission channel for lithium ions can be provided, such that the secondary battery, under a low temperature or high rate discharge, has smaller battery polarization, and lower voltage drop, and the good discharge capacity is maintained, thereby improving the low temperature performance of the secondary battery.

In some embodiments, based on the total mass of the second positive electrode active material layer, the contents of the second positive electrode active material, the second binder and the second conductive agent are 80% to 98%, 1% to 10% and 1% to 10%, respectively. Without being limited to any theory, by controlling the contents of the positive electrode active material, the binder and the conductive agent in the second positive electrode active material layer with in the above range, the capacity retention rate and power performance of the secondary battery under low temperature conditions can be improved.

In some embodiments, the thickness D1 of the first positive electrode active material layer is 100 $\mu$m to 140 $\mu$m, optionally 110 $\mu$m to 130 $\mu$m, and further optionally 115 $\mu$m to 125 $\mu$m. Without being limited to any theory, by controlling the thickness of the first positive electrode active material layer within the above range, it is beneficial to the improvement of the volume energy density of the secondary battery.

In some embodiments, based on the total mass of the first positive electrode active material layer, the contents of the first positive electrode active material, the first binder and the first conductive agent are 90% to 95%, 2% to 8% and 2% to 8%, respectively. Without being limited to any theory, by controlling the contents of the positive electrode active material, the binder and the conductive agent in the first positive electrode active material layer within the above range, it is beneficial to the improvement of the volume energy density of the secondary battery.

The first conductive agent and the second conductive agent are not particularly limited in the present application as long as the objectives of the present application can be achieved. In some embodiments, the first conductive agent and the second conductive agent are each independently selected from at least one of carbon nanotubes, conductive carbon, gas-phase carbon nanofibers, graphite, acetylene black, metal fibers, organic conductive polymers, and graphene.

The first binder and the second binder are not particularly limited in the present application as long as the objectives of the present application can be achieved. In some embodiments, the first binder and the second binder are each independently selected from at least one of polyvinylidene fluoride, polyvinyl alcohol, polytetrafluoroethylene, sodium carboxymethyl cellulose and polyurethane.

The average particle size of the primary particles of the first active material is not particularly limited in the present application, e.g. 800 nm to 3000 nm, as long as the objectives of the present application can be achieved.

The position of the first positive electrode active material layer and the second positive electrode active material layer above and below the current collector are not particularly limited in the present application as long as the objectives of the present application can be achieved. In some embodiments, referring to FIG. 1, the second positive electrode active material layer 12 can be located below the first positive electrode active material layer 11, that is, between the current collector 13 and the first positive electrode active material layer 11; and in some embodiments, referring to FIG. 2, the first positive electrode active material layer 11 can be located below the second positive electrode active material layer 12, that is, between the current collector 13 and the second positive electrode active material layer 12.

The coating method of the first positive electrode active material layer and the second positive electrode active material layer is not particularly limited in the present application as long as the objectives of the present application can be achieved. In some embodiments, the first positive electrode active material layer and the second positive electrode active material layer may be sequentially coated. In some embodiments, the first positive electrode active material layer and the second positive electrode active material layer may be coated simultaneously.

The preparation method of the carbon-coated $Li_\beta Fe_\alpha M_{(1-\alpha)}PO_4$ active material in the second positive electrode active material layer is not particularly limited in the present application as long as the objectives of the present application can be achieved. In some embodiments, it can be prepared by liquid phase synthesis, comprising the following steps:

step A: mixing an iron source, a lithium source and a phosphorus source according to a certain ratio (for example, the iron source, lithium source and phosphorus source are mixed according to the ratio of iron, phosphorus and lithium atom concentration of 0.5 mol : 0.65 mol : 1.5 mol), adding a solvent and mixing same to obtain a mixed solution A, wherein the solvent is selected from an alcohol, water or a mixture of an alcohol and water, and the alcohol is selected from at least one of ethanol, methanol, ethylene glycol and glycerol; the iron source is selected from at least one of ferrous sulfate, ferrous chloride and ferrous acetate; the phosphorus source is selected from at least one of phosphoric acid and ammonium dihydrogen phosphate; and lithium hydroxide can be used as the lithium source;

step B: after adding a surfactant (for example, the mass ratio of the surfactant to the mixed solution A is 1 : 100) to the mixed solution A, adding a pH modifier to adjust the pH of the mixed solution A to 7-8 to obtain a mixed solution B, wherein the surfactant is selected from one of sodium citrate, sodium lactate, sodium malate and sodium tartrate;

step C: transferring the mixed solution B to a reaction kettle, sealing same at a temperature of 170°C to 250°C and reacting same for 1 h to 6 h, after cooling, filtering and washing the precipitate obtained by the reaction to obtain a lithium iron phosphate material;

the inventor of the present application found that during the hydrothermal precipitation of lithium iron phosphate, the (010) crystal plane exposes more iron ions, and due to the coordination effect, the surfactant is adsorbed on the (010) crystal plane, limiting the further growth rate of the (010) crystal plane, such that the thickness in the [010] crystallographic direction decreases, and the energy required for the deintercalation reaction of lithium ions along the [010] crystallographic direction is the lowest, which can significantly improve the transmission speed of lithium ions and reduce the solid-phase reaction diffusion resistance; and

step D: after drying, uniformly mixing the obtained lithium iron phosphate material with a carbon source (the mass ratio of lithium iron phosphate material to the carbon source is 20 : 1), and then sintering and carbonizing same in an inert nitrogen atmosphere to obtain a carbon-coated $Li_\beta Fe_\alpha M_{(1-\alpha)}PO_4$ active material, wherein the carbon source can be selected from at least one of glucose, sucrose, starch and polyethylene glycol, and the carbonization temperature is 750°C to 800°C.

In the present application, the intensity ratio $I_A/I_B$ of the diffraction peaks can be regulated by controlling parameters such as the reaction time t in the liquid phase method, the concentration C of the reactant, the concentration $C_x$ of the surfactant added, or the selected type of the surfactant. The inventor of the present application found that the $I_A/I_B$ value is increasing with the prolongation of the reaction time, but when the reaction time continues to prolong, the $I_A/I_B$ value would show a downward trend. At the initial stage of the reaction, the lithium iron phosphate nanoparticles grow directionally under the control of the surfactant, and with the increase of the crystal volume, the increase of $I_A$ dominates; but when the reaction time is too long, the epitaxial growth of the (010) crystal plane will reach a equilibrium. The increase in nanoparticle thickness values parallel to the [010] crystallographic orientation leads to a decrease in the proportion of (010) crystal plane exposed. Based on this, in the present application, the liquid-phase reaction time is regulated to be 1 h to 6 h, and within this reaction time range, the $I_A/I_B$ value increases with the prolongation of the reaction time.

The lower concentration of reactant is beneficial to the increase of $I_A/I_B$ value, but too low concentration of reactant will prolong the reaction end time and lower the production efficiency. The mass ratio of the surfactant to the mixed solution A can be controlled within the range of 1 : 100 to 1000.

The preparation method of the carbon-coated $Li_\beta Fe_\alpha M_{(1-\alpha)}PO_4$ active material in the first positive electrode active material layer is not particularly limited in the present application as long as the objectives of the present application can be achieved. In some embodiments, common solid-phase methods or hydrothermal synthesis methods may be employed. Of course, in the present application, the carbon-coated $Li_\beta Fe_\alpha M_{(1-\alpha)}PO_4$ active material in the first positive electrode active material layer can also be prepared by a liquid phase synthesis method.

In the present application, the carbon-coated $Li_\beta Fe_\alpha M_{(1-\alpha)}PO_4$ active material prepared by the liquid phase synthesis method has a nanoscale size, and the following formula can be obtained by Fick's first law:

$$Id=nFDi\frac{Ci}{l}$$

wherein Id is the limiting diffusion current density, n is the number of moles of charge transferred during the electrochemical reaction, F is the Faraday constant, Ci is the surface carrier concentration under complete concentration polarization, and l is the path length of the carrier diffusion from the inside of the nanomaterial to the external interface.

During the charging and discharging of lithium-ion batteries, the nanomaterials with larger Id will show better low-temperature performance and power performance. For the carbon-coated lithium iron phosphate nanomaterial prepared by the liquid phase synthesis method, the diffusion path of lithium ions in the electrochemical reaction is shortened, which makes the carbon-coated lithium iron phosphate material prepared by the method show a high limiting diffusion current density, such that the lithium-ion battery has a good low temperature performance. The carbon-coated lithium iron phosphate material synthesized by a conventional method (such as a solid phase method), as shown in Figure 3, has no orientation in the crystal plane in the microscopic state, and the primary particle size is large. Although the compaction density and the processing performance of the electrode plate are good, the low temperature performance is relatively poor. In addition to the small particle size, the carbon-coated lithium iron phosphate obtained by the liquid phase synthesis method exhibits a crystal-plane growth-oriented flaky morphology in the microscopic state, as shown in Figure 4. The smaller particle size and flake-like morphology are more conducive to the diffusion of lithium ions, resulting in good low temperature performance.

The secondary battery, battery module, battery pack, and power consuming device of the present application will be described below by appropriately referring to the accompanying drawings.

In an embodiment of the present application, a secondary battery is provided, comprising the positive electrode plate according to any one of the above embodiments. The secondary battery of the present application may refer to the lithium-ion battery according to any one of the above embodiments.

Typically, a secondary battery comprises a positive electrode plate, a negative electrode plate, an electrolyte and a separator. During the charge/discharge process of the battery, active ions are intercalated and de-intercalated back and forth between the positive electrode plate and the negative electrode plate. The electrolyte is located between the positive electrode plate and the negative electrode plate and functions for ionic conduction. The separator is provided between the positive electrode plate and the negative electrode plate, and mainly prevents the positive and negative electrodes from short-circuiting and enables ions to pass through.

[Negative electrode plate]

In some embodiments, the negative electrode current collector of the negative electrode plate may be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode plate can be prepared as follows: a first negative electrode slurry and a second negative electrode slurry are prepared; the second negative electrode slurry is coated on the current collector to form a second coating, and then the first negative electrode slurry is coated on a surface of the second coating to form a first coating; or a double-sided coating device may also be used in the coating to coat the first negative electrode slurry and the second negative electrode slurry on the current collector simultaneously; and procedures such as drying and cold pressing are performed to obtain a negative electrode plate, in which the current collector is on one side of the second coating, and the first coating is on the other side of the second coating.

[Electrolyte]

The electrolyte is located between the positive electrode plate and the negative electrode plate and functions for ionic conduction. The type of the electrolyte is not specifically limited in the present application, and can be selected according to actual requirements. For example, the electrolyte may be liquid, gel or all solid.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution may optionally comprise an additive. For example, the additive can include a negative electrode film-forming additive, a positive electrode film-forming additive, and also an additive that can improve certain performances of the battery, such as an additive that improve the overcharge performance of the battery, or an additive that improve the high temperature performance or low-temperature performance of the battery.

[Separator]

In some embodiments, the secondary battery further comprises a separator. The type of the separator is not particularly limited in the present application, and any well known porous-structure separator with good chemical stability and mechanical stability may be selected.

In some embodiments, the material of the separator can be selected from at least one of glass fibers, a non-woven, polyethylene, polypropylene and polyvinylidene fluoride. The separator may be a single-layer film and also a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a laminating process.

In some embodiments, the secondary battery may comprise an outer package. The outer package can be used to encapsulate the above-mentioned electrode assembly and electrolyte.

In some embodiments, the outer package of the secondary battery can be a hard shell, for example, a hard plastic shell, an aluminum shell, a steel shell, etc. The outer package of the secondary battery may also be a soft bag, such as a pouch-type soft bag. The material of the soft bag may be plastics, and the examples of plastics may include polypropylene, polybutylene terephthalate, and polybutylene succinate, etc.

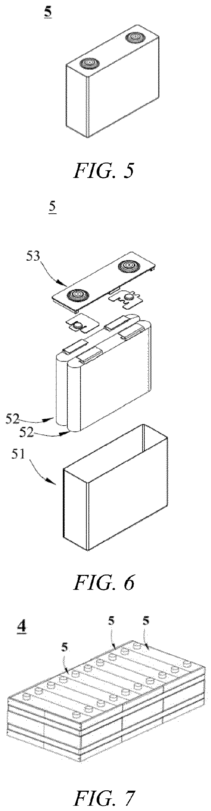

The shape of the secondary battery is not particularly limited in the present application, and may be cylindrical, square or of any other shape. For example, Fig. 5 shows a secondary battery 5 with a square structure as an example.

In some embodiments, referring to Fig. 6, the outer package may include a housing 51 and a cover plate 53. Herein, the housing 51 may include a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate and the separator can be subjected to a winding process or a lamination process to form an electrode assembly 52. The electrode assembly 52 is packaged in the accommodating cavity. The electrolyte infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

Fig. 7 shows a battery module 4 as an example. Referring to Fig. 7, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

Optionally, the battery module 4 may also comprise a housing with an accommodating space, and a plurality of secondary batteries 5 are accommodated in the accommodating space.

In some embodiments, the above-mentioned battery module may also be assembled into a battery pack, the number of battery modules included in the battery pack may be one or more, and the specific number can be selected by those skilled in the art according to the application and capacity of the battery pack.

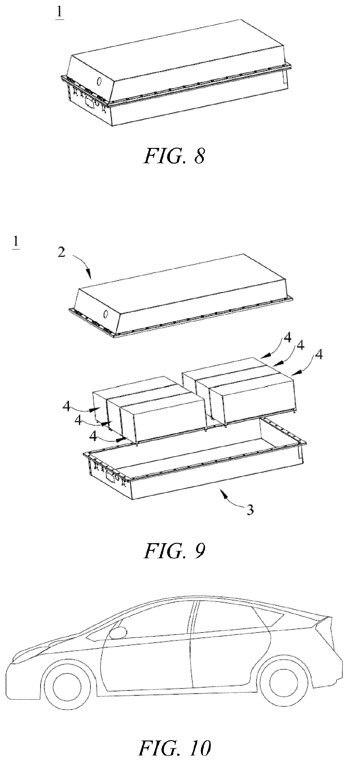

Fig. 8 and Fig. 9 show a battery pack 1 as an example. Referring to Fig. 8 and Fig. 9, the battery pack 1 may comprise a battery box and a plurality of battery modules 4 provided in the battery box. The battery box comprises an upper box body 2 and a lower box body 3, wherein the upper box body 2 can cover the lower box body 3 to form a closed space for accommodating the battery modules 4. A plurality of battery modules 4 may be arranged in the battery box in any manner.

In addition, the present application further provides a power consuming device. The power consuming device comprises at least one of the secondary battery, battery module, or battery pack provided by the present application. The secondary battery, battery module or battery pack may be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

As for the power consuming device, the secondary battery, battery module or battery pack can be selected according to the usage requirements thereof.

Fig. 10 shows a power consuming device as an example. The power consuming device may be a pure electric vehicle, a hybrid electric vehicle, a plug-in hybrid electric vehicle or the like. In order to meet the requirements of the power consuming device for a high power and a high energy density of a secondary battery, a battery pack or a battery module may be used.

As another example, the device may be a mobile phone, a tablet, a laptop computer, etc. The device is generally required to be thin and light, and may use a secondary battery as a power source.

Examples

Hereinafter, the examples of the present application will be explained. The examples described below are exemplary and are merely for explaining the present application, and should not be construed as limiting the present application. The techniques or conditions that are not specified in examples are according to the techniques or conditions described in documents in the art or the product introduction. The reagents or instruments used, if they are not marked with the manufacturer, are common products that are commercially available.

**Example 1**

<Preparation of positive electrode plate>

<Preparation of first positive electrode slurry>

The carbon-coated $LiFePO_4$ with a primary particle average particle size of 800 nm as a first positive electrode active material (obtained by a solid-phase method), a binder polyvinylidene fluoride (PVDF), and a conductive carbon acetylene black are dry-mixed according to the weight ratio of 95 : 3 : 2, then N-methylpyrrolidone (NMP) is added as a solvent, and the system is stirred under the action of a vacuum mixer until the system is homogeneous to obtain a first positive electrode slurry with a viscosity of 20000 mPa·s.

<Preparation of second positive electrode slurry>

The carbon-coated $LiFePO_4$ with a primary particle average particle size of 80 nm as a second positive electrode active material (obtained by a liquid-phase method), a binder polyvinylidene fluoride (PVDF), and a conductive carbon acetylene black are dry-mixed according to the weight ratio of 95 : 3 : 2, then N-methylpyrrolidone (NMP) is added as a solvent, and the system is stirred under the action of a vacuum mixer until the system is homogeneous to obtain a second positive electrode slurry with a viscosity of 20000 mPa·s.

<Preparation of positive electrode plate containing first active material layer and second active material layer>

The prepared second positive electrode slurry is uniformly coated onto the surface of the current collector aluminum foil with a thickness of 12 $\mu$m at a coating weight of 20 g/m$^2$, and dried in an oven at 100°C to obtain a second active material layer with a thickness of 8.5 $\mu$m. The first positive electrode slurry is uniformly coated onto the surface of the second active material layer with a coating weight of 260 g/m$^2$, and dried in an oven at 100°C to obtain a first active material layer with a thickness of 110 $\mu$m, forming a structure as shown in Figure 1, following by processes such as cold pressing, tab forming, and slitting to obtain a positive electrode plate.

<Preparation of negative electrode plate>

1) a negative electrode active material graphite, a conductive agent conductive carbon black and a binder butadiene styrene rubber and sodium carboxymethylcellulose are mixed in a mass ratio of 93 : 3 : 2 : 2, deionized water is added as a solvent, and the system is stirred under the action of a vacuum mixer until the system is homogeneous, to obtain a negative electrode slurry with a viscosity of 20000 mPa·s, and
2) the prepared negative electrode slurry is uniformly coated onto the surface of a copper foil with a thickness of 8 $\mu$m at a coating weight of 200 g/m$^2$, and dried in an oven at 100°C following by processes such as cold pressing, tab forming, and slitting to obtain a negative electrode plate.

<Preparation of electrolyte solution>

In an environment with a water content of less than 10 ppm, non-aqueous organic solvents ethylene carbonate, ethyl methyl carbonate and diethyl carbonate were mixed in a volume ratio of 1 : 1 : 1 to obtain an electrolyte solution solvent, and then a lithium salt $LiPF_6$ was dissolved in the mixed solvent, to make an electrolyte solution with a lithium salt concentration of 1 mol/L.

<Preparation of separator>

A polyethylene film with a thickness of 9 $\mu$m was selected as a separator, and before use, the separator was slitted to obtain a suitable width according to the dimensions of the positive electrode plate and the negative electrode plate.

<Preparation of lithium-ion battery>

The above positive electrode plate, a separator and negative electrode plate are punched into a plate, such that the separator was located between the positive electrode plate and the negative electrode plate to play a role of isolation, and then the plate is stacked several times to obtain an electrode assembly; and the electrode assembly was placed in an outer package and dried, and then an electrolyte solution was injected, followed by the procedures such as vacuum encapsulation, standing, forming and shaping, to obtain a lithium-ion battery.

**Example 2** to **Example 4**

In the <Preparation of positive electrode plate>, the procedure is the same as that of Example 1, except that the reaction time of the liquid phase synthesis process is adjusted to change the diffraction peak intensity ratio $I_A/I_B$ value of the second active material in the X-ray pattern as shown in Table 1.

**Example 5** to **Example 7**

In the <Preparation of positive electrode plate>, the procedure is the same as that of Example 1, except that the average particle size of the primary particles of the second active material is adjusted as shown in Table 1.

**Example 8** to **Example 13**

In the <Preparation of positive electrode plate>, the procedure is the same as that of Example 1, except that the thickness of the second positive electrode active material layer and the coating weight of the first positive electrode active material are adjusted as shown in Table 1.

**Example 14** to **Example 15**

In the <Preparation of positive electrode plate>, the procedure is the same as that of Example 1, except that the type of the second positive electrode active material is adjusted as shown in Table 1.

**Example 16**

The procedure is the same as that of Example 6, except that in <Preparation of positive electrode plate containing first positive electrode active material layer and second positive electrode active material layer>, the first positive electrode slurry is first coated onto the current collector to obtain the first positive electrode active material layer, and then the second positive electrode slurry is coated onto the surface of the first positive electrode active material layer to form the structure shown in FIG. 2.

**Example 17** to **Example 18**

In the <Preparation of positive electrode plate>, the procedure is the same as that of Example 1, except that the type of the first positive electrode active material and the thickness of the first positive electrode active material layer are adjusted as shown in Table 1.

**Comparative example 1** to **Comparative example 2**

In the <Preparation of positive electrode plate>, the procedure is the same as that of Example 6, except that the diffraction peak intensity ratio in the X-ray pattern of the second active material is adjusted as shown in Table 1.

**Comparative example 3**

In the <Preparation of positive electrode plate>, the procedure is the same as that of Example 1, except that the average particle size of the primary particles of the second active material is adjusted as shown in Table 1.

**Comparative example 4** to **Comparative example 5**

In the <Preparation of positive electrode plate>, the procedure is the same as that of Example 8, except that the thickness of the second positive electrode active material layer and the coating weight of the first positive electrode active material are adjusted as shown in Table 1.

**Comparative example 6**

In the <Preparation of positive electrode plate>, the procedure is the same as that of Example 1, except that the second positive electrode active material layer is not prepared.

**Comparative example 7**

In the <Preparation of positive electrode plate>, the procedure is the same as that of Example 17, except that the second positive electrode active material layer is not prepared.

**Comparative example 8**

In the <Preparation of positive electrode plate>, the procedure is the same as that of Example 18, except that the second positive electrode active material layer is not prepared.

Table 1 Relevant parameters of Examples 1 to 4 and Comparative examples 1 to 2

| | Second positive electrode active material layer | | First positive electrode active material layer |
|---|---|---|---|
| | Second positive electrode active material | Diffraction peak intensity ratio $I_A/I_B$ | First positive electrode active material |
| Example 1 | Carbon-coated $LiFePO_4$ | 1.05 | Carbon-coated $LiFePO_4$ |
| Example 2 | Carbon-coated $LiFePO_4$ | 1.0 | Carbon-coated $LiFePO_4$ |
| Example 3 | Carbon-coated $LiFePO_4$ | 0.98 | Carbon-coated $LiFePO_4$ |
| Example 4 | Carbon-coated $LiFePO_4$ | 1.1 | Carbon-coated $LiFePO_4$ |
| Comparative example 1 | Carbon-coated $LiFePO_4$ | 0.92 | Carbon-coated $LiFePO_4$ |
| Comparative example 2 | Carbon-coated $LiFePO_4$ | 0.90 | Carbon-coated $LiFePO_4$ |

Table 2 Relevant parameters of Examples 5 to 18 and Comparative examples 3 to 8

| | Second positive electrode active material layer | | | | | First positive electrode active material layer | | | |
|---|---|---|---|---|---|---|---|---|---|
| | Second positive electrode active material | Coating weight (g/m$^2$) | Thickness ($\mu$m) | Diffraction peak intensity ratio $I_A/I_B$ | Average particle size of primary particles (nm) | First positive electrode active material | Coating weight (g/m$^2$) | Thickness ($\mu$m) | Average particle size of primary particles (nm) |
| Example 5 | Carbon-coated LiFePO$_4$ | 20 | 8.5 | 1.05 | 160 | Carbon-coated LiFePO$_4$ | 260 | 110 | 800 |
| Example 6 | Carbon-coated LiFePO$_4$ | 20 | 8.5 | 1.05 | 240 | Carbon-coated LiFePO$_4$ | 260 | 110 | 800 |
| Example 7 | Carbon-coated LiFePO$_4$ | 20 | 8.5 | 1.05 | 20 | Carbon-coated LiFePO$_4$ | 260 | 110 | 800 |
| Example 8 | Carbon-coated LiFePO$_4$ | 4.5 | 2 | 1.05 | 80 | Carbon-coated LiFePO$_4$ | 258 | 110 | 800 |
| Example 9 | Carbon-coated LiFePO$_4$ | 24 | 10 | 1.05 | 80 | Carbon-coated LiFePO$_4$ | 250 | 105 | 800 |
| Example 10 | Carbon-coated LiFePO$_4$ | 35 | 15 | 1.05 | 80 | Carbon-coated LiFePO$_4$ | 245 | 105 | 800 |
| Example 11 | Carbon-coated LiFePO$_4$ | 58 | 25 | 1.05 | 80 | Carbon-coated LiFePO$_4$ | 235 | 100 | 800 |
| Example 12 | Carbon-coated LiFePO$_4$ | 70 | 30 | 1.05 | 80 | Carbon-coated LiFePO$_4$ | 230 | 100 | 800 |
| Example 13 | Carbon-coated LiFePO$_4$ | 94 | 40 | 1.05 | 80 | Carbon-coated LiFePO$_4$ | 220 | 95 | 800 |
| Example 14 | Carbon-coated LiFe$_{0.5}$Mn$_{0.5}$PO$_4$ | 20 | 8.5 | 1.05 | 80 | Carbon-coated LiFePO$_4$ | 260 | 110 | 800 |
| Example 15 | Carbon-coated LiFe$_{0.4}$Mn$_{0.6}$PO$_4$ | 20 | 8.5 | 1.05 | 80 | Carbon-coated LiFePO$_4$ | 260 | 110 | 800 |
| Example 16 | Carbon-coated LiFePO$_4$ | 20 | 8.5 | 1.05 | 240 | Carbon-coated LiFePO$_4$ | 260 | 110 | 800 |

EP 4 213 246 B1

14

(continued)

| | Second positive electrode active material layer | | | | | First positive electrode active material layer | | | |
|---|---|---|---|---|---|---|---|---|---|
| | Second positive electrode active material | Coating weight (g/m$^2$) | Thickness ($\mu$m) | Diffraction peak intensity ratio $I_A/I_B$ | Average particle size of primary particles (nm) | First positive electrode active material | Coating weight (g/m$^2$) | Thickness ($\mu$m) | Average particle size of primary particles (nm) |
| Example 17 | Carbon-coated LiFePO$_4$ | 70 | 20 | 1.05 | 80 | LiCoO$_2$ | 100 | 24 | 5000 |
| Example 18 | Carbon-coated LiFePO$_4$ | 70 | 20 | 1.05 | 80 | LiCo$_{0.2}$Ni$_{0.5}$Mn$_{0.3}$O$_2$ | 100 | 20 | 3000 |
| Comparative example 3 | Carbon-coated LiFePO$_4$ | 20 | 8.5 | 1.05 | 300 | Carbon-coated LiFePO$_4$ | 260 | 110 | 800 |
| Comparative example 4 | Carbon-coated LiFePO$_4$ | 1.5 | 0.5 | 1.05 | 80 | Carbon-coated LiFePO$_4$ | 275 | 115 | 800 |
| Comparative example 5 | Carbon-coated LiFePO$_4$ | 235 | 100 | 1.05 | 80 | Carbon-coated LiFePO$_4$ | 45 | 20 | 800 |
| Comparative example 6 | / | / | / | / | / | LiFePO$_4$ | 260 | 110 | 800 |
| Comparative example 7 | / | / | / | / | / | LiCoO$_2$ | 100 | 24 | 5000 |
| Comparative example 8 | / | / | / | / | / | LiNi$_{0.5}$Co$_{0.2}$Mn$_{0.3}$O$_2$ | 100 | 20 | 3000 |
| In table 2, "j" indicates not contained or not detected. | | | | | | | | | |

In addition, the secondary batteries prepared in the above-mentioned Examples 1 to 18 and comparative examples 1 to 8 are tested for performance, and the test results are shown in Table 3 and Table 4 below.

**Capacity retention rate test at -20°C:**

After the lithium-ion batteries prepared in each example and comparative example are kept at 25°C for 2 h, they are charged to 3.65 V with a constant current rate of 0.33 C, and charged to 0.05 C with a constant voltage at 3.65 V. After the charging is completed, the tested battery is allowed to stand at 25°C for 2 h, and then discharged to 2.5 V at a rate of 0.5 C by means of a direct current, and the discharge capacity at room temperature thereof is recorded as $C_0$.

After the lithium-ion batteries prepared in each example and comparative example are kept at 25°C for 2 h, they are charged to 3.65 V with a constant current rate of 0.33 C, and charged to 0.05 C with a constant voltage at 3.65 V. After the charging is completed, the tested battery is allowed to stand at -20°C for 2 h, and then discharged to 2.5 V at a rate of 0.5 C by means of a direct current, and the discharge capacity at -20°C thereof is recorded as $C_1$. The capacity retention rate of the lithium-ion battery at -20°C is: $(C_1/C_0) \times 100\%$.

**Power performance test at -20°C:**

Capacity calibration: After the lithium-ion batteries prepared in each example and comparative example are kept at 25°C for 2 h, they are charged to 3.65 V with a constant current rate of 0.33 C, and charged to 0.05 C with a constant voltage at 3.65 V. After the charging is completed, the tested battery is allowed to stand at 25°C for 2 h, and then discharged to 2.5 V at a rate of 0.33 C by means of a direct current, and the discharge capacity at room temperature thereof is recorded as $C_0$.

Adjustment of SOC (state of charge): After the lithium-ion battery with the calibrated capacity is kept at 25°C for 2 h, it is discharged at a discharge rate of $1/3 \, C_0$ for 144 min, and the capacity of the lithium-ion battery is adjusted to 20% SOC;

Power test: the lithium-ion battery of 20% SOC is allowed to stand at -20°C for 2 h, then under a pulse current I, is discharged at a discharge rate of $3 \, C_0$ for 30 s, the voltage thereof before $3 \, C_0$ discharge is recorded as $V_1$, and the voltage at the end of 30 s discharge is recorded as $V_2$; The value of $(V_1 - V_2)/I$ is calculated, through which the power performance of the battery can be characterized.

**Calculation of volume energy density $E_x$ at -20°C:**

After the lithium-ion batteries prepared in each example and comparative example are kept at 25°C for 2 h, they are charged to 3.65 V with a constant current rate of 0.33 C, and charged to 0.05 C with a constant voltage at 3.65 V. After the charging is completed, the tested battery is allowed to stand at -20°C for 2 h, and then discharged to 2.5 V at a rate of 0.33 C by means of a direct current, the discharge energy $E_0$ (wh) of the lithium battery thereof, the coating area S ($dm^2$) of the positive electrode plate and the thickness h (dm) of the positive electrode plate are recorded, then the volume energy density $E_x = E_0/(S \times h)$.

**Diffraction peak intensity ratio test:**

The diffraction peak intensity ratio of the second positive electrode active material is tested by X-ray, wherein a copper target X-ray diffractometer is used, the second active material is placed on the X-ray diffractometer (model Shimadzu XRD-7000) test platform, the start angle of scan is 10°, the end angle is 90°, and a step size is 0.013, and then the test is started to obtain the diffraction pattern of the second active material in the range of the diffraction angle of 10° to 90°, and the diffraction peak intensity ratio $I_A/I_B$ is determined according to the diffraction pattern.

Table 3 Performance test results of Examples 1 to 16 and Comparative examples 1 to 6

|  | Capacity retention rate at -20°C | Power performance at -20°C (mΩ) | Volume energy density at -20°C (Wh/L) |
|---|---|---|---|
| Example 1 | 89% | 5 | 950 |
| Example 2 | 87% | 6 | 850 |
| Example 3 | 85% | 7 | 880 |
| Example 4 | 92% | 4 | 980 |
| Example 5 | 81% | 6 | 900 |

(continued)

| | Capacity retention rate at -20°C | Power performance at -20°C (mΩ) | Volume energy density at -20°C (Wh/L) |
|---|---|---|---|
| Example 6 | 75% | 8 | 750 |
| Example 7 | 92% | 3 | 920 |
| Example 8 | 72% | 10 | 800 |
| Example 9 | 75% | 8 | 760 |
| Example 10 | 82% | 7 | 840 |
| Example 11 | 91% | 4.5 | 920 |
| Example 12 | 92% | 5.5 | 890 |
| Example 13 | 93% | 6.5 | 850 |
| Example 14 | 87% | 6 | 900 |
| Example 15 | 85% | 6 | 1000 |
| Example 16 | 71% | 8 | 745 |
| Comparative example 1 | 70% | 12 | 700 |
| Comparative example 2 | 65% | 14 | 660 |
| Comparative example 3 | 70% | 12 | 800 |
| Comparative example 4 | 60% | 24 | 680 |
| Comparative example 5 | 96% | 14 | 720 |
| Comparative example 6 | 50% | 45 | 600 |

Table 4 Performance test results of Examples 17 to 18 and Comparative examples 7 to 8

| | Capacity retention rate at -20°C |
|---|---|
| Example 17 | 85% |
| Example 18 | 89% |
| Comparative example 7 | 78% |
| Comparative example 8 | 84% |

According to the above results, it can be seen that in example 1 to example 18, by controlling the intensity ratio $I_A/I_B$ of the diffraction peak A to the diffraction peak B of the second positive electrode active material in the second positive electrode active material layer to satisfy: $0.98 \leq I_A/I_B \leq 1.1$, a lithium ion battery with good low temperature performance as a whole can be obtained.

From example 1 to example 4 and comparative example 1 to comparative example 2, it can be seen that the positive electrode plate of the lithium ion battery includes a first positive electrode active material layer and a second positive electrode active material layer, wherein the intensity ratio $I_A/I_B$ of the diffraction peak A to the diffraction peak B of the second positive electrode active material in the second positive electrode active material layer satisfies: $0.98 \leq I_A/I_B \leq 1.1$, such that the lithium ion battery has good low temperature capacity retention rate, low temperature power performance and low temperature volume energy density, and has achieved good results. In contrast, the lithium ion batteries of comparative examples 1 to 2 do not achieve effective improvement in the low temperature capacity retention rate, low temperature power performance and low temperature volume energy density due to the fact that the diffraction peak intensity ratio $I_A/I_B$ is too low or too high. That is, the low temperature performance has not been effectively improved.

From example 1, it can also be seen that the low temperature performance of the lithium ion battery with the second positive electrode active material layer of the present application is improved. In contrast, the lithium ion battery of comparative example 6 does not have the second positive electrode active material layer and does not achieve the effective improvement in the low temperature capacity retention rate, low temperature power performance and low temperature volume energy density. That is, the low temperature performance has not been effectively improved.

From example 1, example 5 to example 7 and comparative example 3, it can be seen that if the average particle size of the primary particles of the second positive electrode active material is too large, the lithium ion transmission path increases, and the excessively long lithium ion transmission path is not conducive to an electrochemical reaction, so that the ability of the second positive electrode active material layer to improve the low temperature performance is greatly inhibited, and if the average particle size of the primary particles of the second positive electrode active material is too small, the compaction density of the second positive electrode active material layer will decrease, which is not conducive to the improvement of the lithium ion energy density. By adjusting and controlling the average particle size of the primary particles of the second positive electrode active material to be within the range of the present application, a lithium ion battery with good low temperature performance can be obtained.

From example 8 to example 13 and comparative example 4 to comparative example 5, it can be seen that when the thickness of the second positive electrode active material layer is too low (for example, comparative example 4), the low temperature performance of the lithium ion battery cannot be significantly improved; and when the thickness of the second positive electrode active material layer is too high (for example, comparative example 5), the volume energy density of the lithium ion battery decreases. By adjusting and controlling the average particle size of the primary particles of the second positive electrode active material to be within the range of the present application, a lithium ion battery with good low temperature performance and volume energy density can be obtained.

The thickness of the second positive electrode active material layer, the type of the second positive electrode active material, and the type of the first positive electrode active material will also affect the low temperature performance of the lithium ion battery of the present application. It can be seen from Examples 5 to 18 that, as long as the above parameters are within the scope of the present application, a lithium ion battery with good comprehensive low temperature performance can be obtained.

It can be seen from Example 6 and Example 16 that the first positive electrode active material layer is arranged between the current collector and the second positive electrode active material layer, or the second positive electrode active material layer is arranged between the current collector and the first positive electrode active material layer, the low temperature performance of the lithium ion battery can be effectively improved.

From examples 17 and 18, it can be seen that for the lithium ion battery with the second positive electrode active material layer of the present application, the capacity retention rate at -20°C and the low temperature performance thereof are improved. In contrast, the lithium ion batteries of comparative examples 7 and 8 do not have the second positive electrode active material layer and does not achieve the effective improvement in the capacity retention rate at -20°C.

It should be noted that the present application is not limited to the above embodiments. The above embodiments are exemplary only.

**Claims**

1. A positive electrode plate, **characterized in that** it includes a current collector (13), a first positive electrode active material layer (11) and a second positive electrode active material layer (12), wherein the second positive electrode active material layer (12) is arranged between the current collector (13) and the first positive electrode active material layer (11), or the first positive electrode active material layer (11) is arranged between the current collector (13) and the second positive electrode active material layer (12);

the first positive electrode active material layer (11) comprises a first positive electrode active material, a first binder and a first conductive agent, wherein the first positive electrode active material is selected from at least one of $Li_qCoO_2$, $Li_{1+x}Co_{1-y-z}Ni_yMn_zO_2$ or carbon-coated $Li_\beta Fe_\alpha M_{(1-\alpha)}PO_4$, wherein $0 \leq q \leq 1$, $0 \leq x \leq 0.1$, $0 \leq y \leq 0.95$, $0 \leq z \leq 0.95$, $0.2 \leq \alpha \leq 1$, $1 \leq \beta \leq 1.1$, and M is selected from at least one of Cu, Mn, Cr, Zn, Pb, Ca, Co, Ni and Sr; and

the second positive electrode active material layer (12) comprises a second positive electrode active material, a second binder and a second conductive agent, wherein the second positive electrode active material is selected from carbon-coated $Li_\beta Fe_\alpha M_{(1-\alpha)}PO_4$, where $0.2 \leq \alpha \leq 1$, $1 \leq \beta \leq 1.1$, M is selected from at least one of Cu, Mn, Cr, Zn, Pb, Ca, Co, Ni, and Sr, and the second positive electrode active material has a diffraction peak A between 29° and 30° in the X-ray diffraction pattern, and a diffraction peak B between 25° and 26°, and the intensity ratio $I_A/I_B$ of the diffraction peaks satisfies: $0.98 \leq I_A/I_B \leq 1.1$, optionally $1.05 \leq I_A/I_B \leq 1.1$, wherein the peak intensity ratio is determined using a copper target X-ray diffractometer.

2. The positive electrode plate according to claim 1, **characterized in that** the thickness D2 of the second positive electrode active material layer (12) is 2 $\mu$m to 40 $\mu$m, optionally 10 $\mu$m to 30 $\mu$m, and further optionally 15 $\mu$m to 25 $\mu$m.

3. The positive electrode plate according to any one of claims 1 to 2, **characterized in that**, based on the total mass of the second positive electrode active material layer (12), the contents of the second positive electrode active material, the second binder and the second conductive agent are 80% to 98%, 1% to 10% and 1% to 10%, respectively.

4. The positive electrode plate according to any one of claims 1 to 3, **characterized in that** the thickness D1 of the first positive electrode active material layer (11) is 100 $\mu$m to 140 $\mu$m, optionally 110 $\mu$m to 130 $\mu$m, and further optionally 115 $\mu$m to 125 $\mu$m.

5. The positive electrode plate according to any one of claims 1 to 4, **characterized in that**, based on the total mass of the first positive electrode active material layer (11), the contents of the first positive electrode active material, the first binder and the first conductive agent are 90% to 95%, 2% to 8% and 2% to 8%, respectively.

6. The positive electrode plate according to any one of claims 1 to 5, **characterized in that** the first conductive agent and the second conductive agent are each independently selected from at least one of carbon nanotubes, conductive carbon, gas-phase carbon nanofibers, graphite, acetylene black, metal fibers, organic conductive polymers, and graphene; the first binder and the second binder are each independently selected from at least one of polyvinylidene fluoride, polyvinyl alcohol, polytetrafluoroethylene, sodium carboxymethyl cellulose and polyurethane.

7. A secondary battery (5), **characterized in that** it comprises a positive electrode plate according to any one of claims 1-6.

8. A battery module (4), **characterized in that** it comprises a secondary battery (5) according to claim 7.

9. A battery pack (1), **characterized in that** it comprises a battery module (4) according to claim 8.

10. A power consuming device, **characterized in that** it comprises at least one selected from a secondary battery (5) according to claim 7, a battery module (4) according to claim 8, or a battery pack (1) according to claim 9.

**Patentansprüche**

1. Positive Elektrodenplatte, **dadurch gekennzeichnet, dass** sie einen Stromkollektor (13), eine erste positive elektrodenaktive Materialschicht (11) und eine zweite positive elektrodenaktive Materialschicht (12) umfasst, wobei die zweite positive elektrodenaktive Materialschicht (12) zwischen dem Stromkollektor (13) und der ersten positiven elektrodenaktiven Materialschicht (11) angeordnet ist oder die erste positive elektrodenaktive Materialschicht (11) zwischen dem Stromkollektor (13) und der zweiten positiven elektrodenaktiven Materialschicht (12) angeordnet ist;

die erste positive elektrodenaktive Materialschicht (11) ein erstes positives elektrodenaktives Material, ein erstes Bindemittel und ein erstes leitfähiges Mittel umfasst, wobei das erste positive elektrodenaktive Material ausgewählt ist aus mindestens einem von $Li_qCoO_2$, $Li_{1+x}Co_{1-y-z}Ni_yMn_zO_2$ oder kohlenstoffbeschichtetem $Li_\beta Fe_\alpha M_{(1-\alpha)}PO_4$, wobei $0 \leq q \leq 1$, $0 \leq x \leq 0{,}1$, $0 \leq y \leq 0{,}95$, $0 \leq z \leq 0{,}95$, $0{,}2 \leq \alpha \leq 1$, $1 \leq \beta \leq 1{,}1$, und M ausgewählt ist aus mindestens einem von Cu, Mn, Cr, Zn, Pb, Ca, Co, Ni und Sr; und die zweite positive elektrodenaktive Materialschicht (12) ein zweites positives elektrodenaktives Material, ein zweites Bindemittel und ein zweites leitfähiges Mittel umfasst, wobei das zweite positive elektrodenaktive Material ausgewählt ist aus kohlenstoffbeschichtetem $Li_\beta Fe_\alpha M_{(1-\alpha)}PO_4$, wobei $0{,}2 \leq \alpha \leq 1$, $1 \leq \beta \leq 1{,}1$, M ausgewählt ist aus mindestens einem von Cu, Mn, Cr, Zn, Pb, Ca, Co, Ni und Sr, und das zweite positive elektrodenaktive Material einen Beugungspeak A zwischen 29° und 30° im Röntgenbeugungsmuster und einen Beugungspeak B zwischen 25° und 26° aufweist und das Intensitätsverhältnis $I_A/I_B$ der Beugungspeaks erfüllt: $0{,}98 \leq I_A/I_B \leq 1{,}1$, gegebenenfalls $1{,}05 \leq I_A/I_B \leq 1{,}1$, wobei das Peakintensitätsverhältnis unter Verwendung eines Kupfer-Target-Röntgendiffraktometers bestimmt wird.

**2.** Positive Elektrodenplatte nach Anspruch 1, **dadurch gekennzeichnet, dass** die Dicke D2 der Schicht des zweiten positiven elektrodenaktive Materials (12) 2 $\mu$m bis 40 $\mu$m, optional 10 $\mu$m bis 30 $\mu$m, und weiter optional 15 $\mu$m bis 25 $\mu$m beträgt.

**3.** Positive Elektrodenplatte nach einem der Ansprüche 1 bis 2, **dadurch gekennzeichnet, dass**, bezogen auf die Gesamtmasse der zweiten positiven elektrodenaktiven Materialschicht (12), die Anteile des zweiten positiven Elektrodenaktivmaterials, des zweiten Bindemittels und des zweiten leitfähigen Mittels 80% bis 98%, 1% bis 10% bzw. 1% bis 10% betragen.

**4.** Positive Elektrodenplatte nach einem der Ansprüche 1 bis 3, **dadurch gekennzeichnet, dass** die Dicke D1 der Schicht des ersten positiven elektrodenaktiven Materials (11) 100 $\mu$m bis 140 $\mu$m, optional 110 $\mu$m bis 130 $\mu$m, und weiter optional 115 $\mu$m bis 125 $\mu$m beträgt.

**5.** Positive Elektrodenplatte nach einem der Ansprüche 1 bis 4, **dadurch gekennzeichnet, dass**, bezogen auf die Gesamtmasse der ersten positiven elektrodenaktiven Materialschicht (11), die Anteile des ersten positiven elektrodenaktiven Materials, des ersten Bindemittels und des ersten leitfähigen Mittels 90% bis 95%, 2% bis 8% bzw. 2% bis 8% betragen.

**6.** Positive Elektrodenplatte nach einem der Ansprüche 1 bis 5, **dadurch gekennzeichnet, dass** das erste leitfähige Mittel und das zweite leitfähige Mittel jeweils unabhängig voneinander aus mindestens einem der folgenden Stoffe ausgewählt sind: Kohlenstoff-Nanoröhren, leitfähiger Kohlenstoff, Gasphasen-Kohlenstoff-Nanofasern, Graphit, Acetylenschwarz, Metallfasern, organische leitfähige Polymere und Graphen; das erste Bindemittel und das zweite Bindemittel jeweils unabhängig voneinander ausgewählt sind aus mindestens einem der folgenden Stoffe: Polyvinylidenfluorid, Polyvinylalkohol, Polytetrafluorethylen, Natriumcarboxymethylcellulose und Polyurethan.

**7.** Sekundärbatterie (5), **dadurch gekennzeichnet, dass** sie eine positive Elektrodenplatte nach einem der Ansprüche 1 bis 6 umfasst.

**8.** Batteriemodul (4), **dadurch gekennzeichnet, dass** es eine Sekundärbatterie (5) nach Anspruch 7 umfasst.

**9.** Batteriepack (1), **dadurch gekennzeichnet, dass** es ein Batteriemodul (4) nach Anspruch 8 umfasst.

**10.** Stromverbrauchende Vorrichtung, **dadurch gekennzeichnet, dass** sie mindestens eines der folgenden Elemente umfasst: eine Sekundärbatterie (5) nach Anspruch 7, ein Batteriemodul (4) nach Anspruch 8 oder ein Batteriepaket (1) nach Anspruch 9.

**Revendications**

**1.** Plaque d'électrode positive, **caractérisée par le fait qu'**elle comprend un collecteur de courant (13), une première couche de matériau actif d'électrode positive (11) et une deuxième couche de matériau actif d'électrode positive (12), la deuxième couche de matériau actif d'électrode positive (12) étant disposée entre le collecteur de courant (13) et la première couche de matériau actif d'électrode positive (11), ou la première couche de matériau actif d'électrode positive (11) étant disposée entre le collecteur de courant (13) et la deuxième couche de matériau actif d'électrode positive (12) ;

la première couche de matériau actif d'électrode positive (11) comprend un premier matériau actif d'électrode positive, un premier liant et un premier agent conducteur, le premier matériau actif d'électrode positive étant choisi parmi au moins un des matériaux suivants : $Li_qCoO_2$, $Li_{1+x}Co_{1-y-z}Ni_yMn_zO_2$ ou $Li_\beta Fe_\alpha M_{(1-\alpha)}PO_4$ enrobé de carbone, où $0 \leq q \leq 1$, $0 \leq x \leq 0,1$, $0 \leq y \leq 0,95$, $0 \leq z \leq 0,95$, $0,2 \leq \alpha \leq 1$, $1 \leq \beta \leq 1,1$, et M est choisi parmi au moins un des éléments suivants: Cu, Mn, Cr, Zn, Pb, Ca, Co, Ni et Sr ; et
la deuxième couche de matériau actif d'électrode positive (12) comprend un deuxième matériau actif d'électrode positive, un deuxième liant et un deuxième agent conducteur, dans lequel le deuxième matériau actif d'électrode positive est choisi parmi $Li_\beta Fe_\alpha M_{(1-\alpha)}PO_4$ enrobés de carbone, où $0,2 \leq \alpha \leq 1$, $1 \leq \beta \leq 1,1$, M est choisi parmi au moins un parmi Cu, Mn, Cr, Zn, Pb, Ca, Co, Ni et Sr, et le deuxième matériau actif d'électrode positive présente un pic de diffraction A entre 29° et 30° dans le diagramme de diffraction des rayons X, et un pic de diffraction B entre 25° et 26°, et le rapport d'intensité $I_A/I_B$ des pics de diffraction satisfait : $0,98 \leq I_A/I_B \leq 1,1$, éventuellement $1,05 \leq I_A/I_B \leq 1,1$, le rapport d'intensité des pics étant déterminé à l'aide d'un diffractomètre à rayons X à cible en cuivre.

2. Plaque d'électrode positive selon la revendication 1, **caractérisée en ce que** l'épaisseur D2 de la seconde couche de matériau actif d'électrode positive (12) est comprise entre 2 $\mu$m et 40 $\mu$m, éventuellement entre 10 $\mu$m et 30 $\mu$m, et encore éventuellement entre 15 $\mu$m et 25 $\mu$m.

3. Plaque d'électrode positive selon l'une des revendications 1 à 2, **caractérisée en ce que**, sur la base de la masse totale de la seconde couche de matériau actif d'électrode positive (12), les teneurs du second matériau actif d'électrode positive, du second liant et du second agent conducteur sont respectivement de 80% à 98%, de 1% à 10% et de 1% à 10%.

4. Plaque d'électrode positive selon l'une des revendications 1 à 3, **caractérisée en ce que** l'épaisseur D1 de la première couche de matériau actif d'électrode positive (11) est de 100 $\mu$m à 140 $\mu$m, éventuellement de 110 $\mu$m à 130 $\mu$m, et encore éventuellement de 115 $\mu$m à 125 $\mu$m.

5. Plaque d'électrode positive selon l'une des revendications 1 à 4, **caractérisée en ce que**, sur la base de la masse totale de la première couche de matériau actif d'électrode positive (11), les teneurs du premier matériau actif d'électrode positive, du premier liant et du premier agent conducteur sont respectivement de 90% à 95%, de 2% à 8% et de 2% à 8%.

6. Plaque d'électrode positive selon l'une des revendications 1 à 5, **caractérisée en ce que** le premier agent conducteur et le second agent conducteur sont chacun indépendamment choisis parmi au moins un des nanotubes de carbone, du carbone conducteur, des nanofibres de carbone en phase gazeuse, du graphite, du noir d'acétylène, des fibres métalliques, des polymères organiques conducteurs et du graphène ; le premier liant et le second liant sont chacun indépendamment sélectionnés parmi au moins un des éléments suivants : fluorure de polyvinylidène, alcool polyvinylique, polytétrafluoroéthylène, carboxyméthylcellulose sodique et polyuréthane.

7. Batterie secondaire (5), **caractérisée en ce qu'**elle comprend une plaque d'électrode positive selon l'une des revendications 1 à 6.

8. Module de batterie (4), **caractérisé en ce qu'**il comprend une batterie secondaire (5) selon la revendication 7.

9. Ensemble de batteries (1), **caractérisé en ce qu'**il comprend un module de batterie (4) selon la revendication 8.

10. Dispositif de consommation d'énergie, **caractérisé en ce qu'**il comprend au moins un élément choisi parmi une batterie secondaire (5) selon la revendication 7, un module de batterie (4) selon la revendication 8, ou un ensemble de batteries (1) selon la revendication 9.

*FIG. 1*

*FIG. 2*

*FIG. 3*

*FIG. 4*

5

FIG. 5

5

53

52
52

51

FIG. 6

4    5    5

5

FIG. 7

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11050053 B2
- CN 113594412 A